# EUROPEAN PATENT SPECIFICATION

(11) **EP 2 697 494 B1**
(45) Date of publication and mention of the grant of the patent: **21.03.2018**
(21) Application number: 12722531.6
(22) Date of filing: 13.04.2012
(51) Int. Cl.: F02D 19/02, F02D 19/06, F02M 21/02

(54) **A SUPPLY SYSTEM FOR SPONTANEOUSLY -IGNITING INTERNAL COMBUSTION ENGINES BY MEANS OF LIQUID PETROLEUM GAS (LPG)**
VERSORGUNGSSYSTEM FÜR SPONTAN ZÜNDENDE BRENNKRAFTMASCHINEN MITTELS PROPANGAS
CIRCUIT D'ALIMENTATION POUR DES MOTEURS À COMBUSTION INTERNE À ALLUMAGE SPONTANÉ AU MOYEN DE GAZ DE PÉTROLE LIQUÉFIÉ (GPL)

(30) Priority: 13.04.2011 IT BO20110192
(43) Date of publication of application: 19.02.2014
(73) Proprietor: Brum S.r.l., 20121 Milano (IT)
(72) Inventor: CIACCINI, Marco, I-06019 Umbertide (Perugia) (IT)
(74) Representative: Dall'Olio, Christian
(86) International application number: PCT/IB2012/051838
(87) International publication number: WO 2012/140618

(56) References cited:
- WO-A1-02/090749
- WO-A1-2008/036999
- WO-A1-2012/101596
- DE-A1- 10 245 161
- DE-A1-102007 051 677
- DE-A1-102008 063 278

## Description

### FIELD OF THE INVENTION

The present invention relates to a system for supplying spontaneously-igniting internal combustion engines, i.e. Diesel engines, with liquid petroleum gas (LPG), alternatively to original fuel.

### DESCRIPTION OF THE PRIOR ART

In the past, the systems were exclusively reserved to controlled-ignition Otto cycle engines, and the main reason for their existence was the saving obtained with respect to petrol fuel operation, which is much more expensive and attracts higher taxes.

For years, the main component of an LPG fuel system was the pressure reducer-vaporizer, which enabled converting the LPG from the liquid state to the gaseous state, with a suitable reduction of the pressure, supplying it to aspirating conduits so that it mixed with the air before inlet into the combustion chamber.

In practice, the pressure reducer-vaporizer had the functions that, in petrol supply, were performed by the carburettor, which in fact remained inactive during gas supply.

Up to when Otto cycle engines maintained the carburettor supply, the cohabitation with an LPG system was simple, while it became considerably complicated with the arrival of electronic injection plants of the single- or multipoint type, as well as catalytic exhausts, with accompanying Lambda sensors, destined to retroactively influence the injection and ignition parameters.

Notwithstanding the above, vehicles having double supply continue to have a market, for reasons not only to do with savings, but also because the smaller environmental impact of gas combustion has given rise to tax incentives and exemptions from limitations to circulation in town centres, such that even technically dated vehicles can continue to circulate.

Proof of this lies in the fact that while originally gas supply systems were installed exclusively by the owners of vehicles after acquiring them, often against the advice of the manufacturers, in recent years many manufacturers have included in their range new vehicles already predisposed with double fuel supply.

Recently an LPG fuel system has been placed on the market, in which the LPG is injected into the combustion chamber in the liquid state, instead of in the gaseous state as in old-type systems.

The intention is to better control the fuel supply parameters, taken to mean the batching of the loading and phasing of the supply delivery, to optimise the functioning of the gas engine and make it more suited to the modern characteristics of engines.

In this system, an electric pump is positioned internally of the gas cylinder, immersed in the liquid portion of the LPG, suitable for collecting the LPG and sending it, with an increased pressure by a predetermined gradient, towards an injection group provided with specific gas injectors, associated to aspirating manifolds.

The first negative aspect relates to the safety of the plant, and derives from the position of the electric gas delivery pump, which is immersed in the gas as a part of the electric cabling, with grave potential risk of explosion and the need to predispose protections that, over time, might become inadequate.

A further drawback pertains to the functioning of the engine, which is inconstant according to the level the cylinder is filled to; from the full state, in which the gas internally of the cylinder is at about 10 bar, to the almost-empty state, in which the pressure is about 3 bar.

Since the pressure increase given by the pump is fixed, there will be an injection pressure that can vary by 7 bar between one situation and another, the result being that it is impossible to control the quantity of batched gas by acting on the injection timing; it follows that in order for the engine to function with LPG, the fact that the gas is supplied at different pressures has to be taken into account.

A further drawback is consequent to the need to perforate the aspirating manifolds in order to apply the gas injectors; as it is necessary to intervene on elements that are always different and with rather small working spaces, it becomes difficult to ensure a position and an orientation of the gas injectors that are optimal, with inevitable losses in performance.

It is also necessary to mention that apart from the above-noted reasons, the best position that can be attained for the gas injectors is not possible, for the simple reason that it is already occupied by the original fuel injectors, a position that has been reached after considerable research and testing.

The prior art relating to the fuel supply to internal combustion engines by liquefied petroleum gas (LPG), summarised up to now, exclusively relates, as mentioned herein above, to applications on Otto cycle engines, while applications on Diesel cycle engines have never been disclosed and/or marketed.

Document WO 2012/101596 discloses a supply system for internal combustion engines by means of Liquid Petroleum Gas (LPG) according to the preamble of claim 1.

### SUMMARY OF THE INVENTION

The aim of the present invention is therefore to provide a system for alternative supply to spontaneously-igniting internal combustion engines with liquefied petroleum gas (LPG), studied in such a way that the injection of the gas into the combustion chamber occurs with the gas in the liquid state, guaranteeing a constant supply pressure, independent of the filling level of the cylinder and therefore of the internal pressure therein.

A further aim of the invention is to provide a fuel supply system using liquefied petroleum gas (LPG) which by intervening on the parameters of the gas (pressure, temperature, specific weight) enables the conversion of Diesel-cycle internal combustion engines to LPG while obtaining performances that are comparable to the performances obtained with diesel-supplied operation.

A further aim of the invention consists in providing a supply system conformed such as to provide maximum safety against explosions, while avoiding the risks that are inveterate in the prior art solutions.

A further aim of the invention concerns obtaining a system that is able to more fully integrate with the main fuel supply plant, as it functionally exploits various components, while at the same time being less invasive with respect to the known systems, as well as quicker to install, whether assembled at source or mounted later.

A further aim of the invention is to provide a system that because of its original characteristics can be used in engines having various systems of diesel injection.

The above aims are attained by a system for supplying spontaneously-igniting internal combustion engines with liquefied petroleum gas (LPG), of a type destined to be flanked to the original fuel supply plant, provided in an internal combustion engine of a Diesel cycle type and comprising:
a tank for the fuel;
a supply pump associated to a delivery tube of the fuel collected from the tank;
an injection apparatus constituted by at least an injection pump destined to receive the fuel that has flowed through the tube, and by at least an injector, suitable for dispensing batched quantities of the fuel, supplied by the injection pump, to the cylinders of the internal combustion engine;
electronic control means, destined to pilot functioning of the injection pump and the injector, according to predetermined parameters;
the system comprising:
   a cylinder suitable for containing liquid petroleum gas (LPG) at pressure;
   a first conduit, suitable for enabling outlet from the cylinder of liquid petroleum gas (LPG) consequently to opening of first check means associated to the first conduit;
   a sealed container suitable for internally receiving the gas (LPG) carried by the first conduit, and maintaining it in a liquid state;
   a second conduit, suitable for enabling outflow from the sealed container of the gas (LPG) in the liquid state and introducing said gas (LPG) into the fuel delivery tube, downstream of the fuel pump of the original supply plant;
   a delivery pump, associated to the second conduit, suitable for increasing the pressure of the gas (LPG) in the liquid state by a predetermined gradient with respect to a pressure at which the gas (LPG) is kept internally of the container; first and second sensor means, for detecting pressure values of the gas (LPG) in liquid state, associated to the second conduit, respectively upstream and downstream of the delivery pump;
   second check means, associated to the second conduit, downstream of the delivery pump, suitable for enabling or preventing flow of the gas (LPG) towards the delivery tube;
   third check means, associated to the fuel delivery tube, downstream of the supply pump and upstream of a connection of the tube of the second conduit, suitable for enabling or preventing flow of the fuel towards the injection apparatus;
   electronic management and control means, suitable for receiving signals sent by the first and second sensor means and for activating, in appropriate phase relation: a timed and intermittent opening of the first check means for controlled inflow of gas (LPG) in liquid state to the sealed container, such as to maintain the pressure at a predetermined constant value; closure of the third check means and deactivation of the supply pump; activation of the delivery pump and opening of the second check means, for sending the gas (LPG) in the liquid state, having a predetermined constant pressure, to the delivery tube in place of the original fuel, the gas (LPG) being destined to supply the at least an injection pump and to be subsequently sprayed, still in the liquid state, by the at least an injector.

In particular, the system comprises a third conduit, branched from the delivery tube of the fuel downstream of the supply pump and terminating internally of the sealed container, fourth check means being provided in the third conduit, which fourth check means are operated by the electronic management and control means destined to command timed and intermittent opening thereof for injection of batched quantities of original fuel into the sealed container, with an aim of obtaining a composite liquid, formed by liquid petroleum gas (LPG) emulsified by a predetermined percentage of the original fuel, destined to supply the engine when a revolution regime thereof is below a predetermined threshold.

The above-described system enables obtaining all the indicated aims, starting from the maximum security against explosions given by the external position of the gas delivery pump, instead of the position where it is dangerously immersed in the gas present in the prior art.

The technical solution of the container downstream of the cylinder, internally of which the gas gradually is injected at a constant pressure, enables stabilising the supply pressure independently of the level of gas in the cylinder, and therefore the internal pressure therein; this prevents generation of hammer pressure as the minimum pressure is 3 bar.

A constant gas supply pressure in the liquid state guarantees, clearly, a homogeneous functioning of the engine, not influenced by the quantity of residual gases present in the cylinder.

The disclosed system, by exploiting the original injection plant for injecting gas in the liquid state into the cylinders, enables advantageously using the mapping of the series control board and all the devices associated thereto in order to optimize consumptions and emissions.

In the practical realisation of the system of the invention, all those technical specifications will be introduced that are the fruit of experimentation and know-how in the sector, able to optimize the performance and/or the performance of the engine, for example in order to take account of the differences in specific weight, lower calorific power, self-ignition temperature, and so on, existing between the gas (LPG) and the diesel.

Apart from the mentioned advantageous functional aspects, the system of the invention exhibits a smaller number of components to be housed in the engine compartment, which in today's vehicles is ever-more crowded, with a not insignificant saving in terms of time and complications for the installation.

### BRIEF DESCRIPTION OF THE DRAWINGS

The characteristics of the invention will more clearly emerge from the following description of a preferred embodiment of the disclosed fuel system, according to what is set out in the claims and with the aid of the accompanying figures of the drawings, in which:

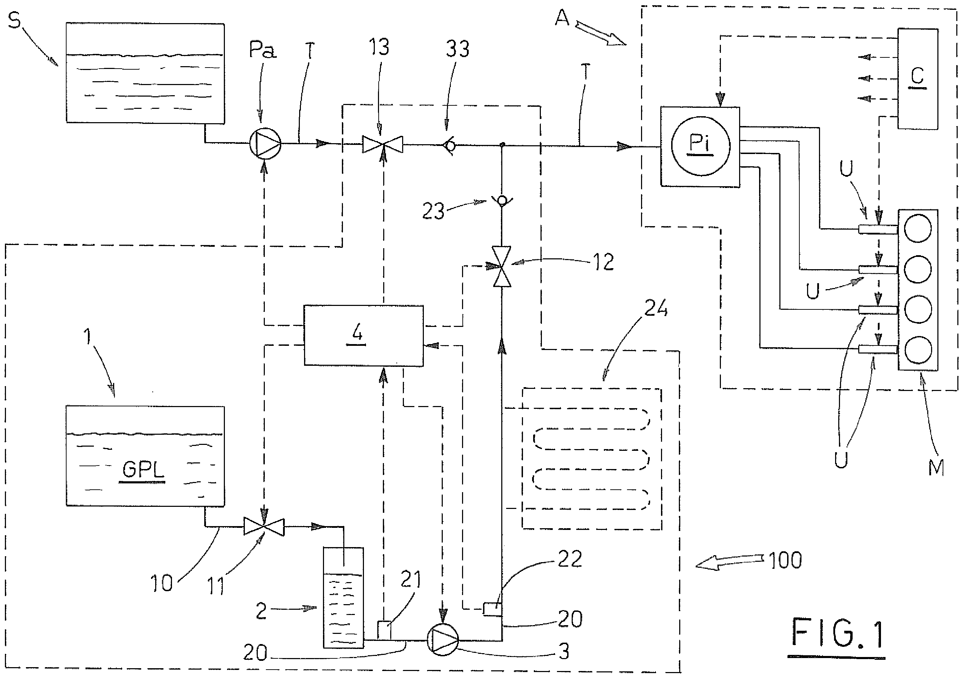

figure 1 is a schematic illustration of a system associated to the original supply plant of an engine;
figure 2 is a similar view to that of figure 1, of the system according to the present invention.

### DESCRIPTION OF THE PREFERRED EMBODIMENTS

With reference to the figures, 100 denotes in its entirety a system of liquefied petroleum gas (LPG).

The system 100 is destined to be flanked to the original fuel plant comprised in an internal combustion engine M having a Diesel cycle.

The original fuel supply plant comprises, among other things:
a tank for the fuel (diesel);
a supply pump Pa associated to a delivery tube T of the fuel collected from the tank S;
an injection apparatus A constituted by at least an injection pump Pi destined to receive the fuel that has flowed through the tube T, and by at least an injector U, suitable for dispensing batched quantities of the fuel, supplied by the injection pump Pi, to the cylinders of the internal combustion engine M;
electronic control means C, destined to pilot functioning of the injection pump Pi and the injector U, according to predetermined parameters.

The injection apparatus A, illustrated by way of example in the figures, comprises a single injection pump Pi and an injector U for each cylinder, but apparatus of any other type can be comprised, from among those commonly used in Diesel cycle engines, for example with the common rail system or with pump injectors.

In the prior art, in the original supply plant downstream of the injection apparatus A, a return circuit of the excess fuel is comprised with respect to what is effectively injected into the cylinders for the formation of the explosive mixture; this circuit, which can have various conformations, has not been illustrated.

The system 100 comprises a cylinder 1 suitable for containing liquid petroleum gas (LPG) at a pressure that can vary from a maximum of about 10 bar, in full conditions, to a minimum of about 3 bar when the gas is almost finished.

A first conduit 10 exits from the lower part of the cylinder 1, which first conduit 10 is destined to enable exit of LPG gas in the liquid state, in phase relation with the opening of the first check means 11, for example a solenoid valve, associated to the first conduit 10.

The first conduit 10 opens internally of a sealed container 2, for example cylindrical, for supplying the LPG gas that has exited from the cylinder 1.

In the sealed container 2, the LPG is maintained in the liquid state and with a predetermined constant pressure (about 1.5 bar), in any case less than the pressure at which the LPG is inside the cylinder 1, controlling the inflow with the intermittent opening of the first check means 11, as will be better specified in the following.

A second conduit 20 exits from the lower part of the sealed container 2, which second conduit 20 is destined to enable outlet of LPG in the liquid state which enters a delivery pump 3 and is subjected to an increase in pressure by a predetermined gradient with respect to the pressure at which the LPG is internally of the container 2.

By way of example, the increase in pressure imposed by the delivery pump 3 brings the LPG to about 2 ÷ 12 in Diesel engines: more precisely 1.5 ÷ 3 bar for previous-generation diesel engines and 10 ÷ 12 bar for latest-generation diesel engines.

Downstream of the delivery pump 3 the second conduit 20 extends up to flowing into the fuel delivery tube T, downstream of the supply pump Pa of the original supply plant.

First and second sensor organs 21, 22 are comprised along the second conduit, for detecting the pressure and temperature values of the LPG in the liquid state, arranged respectively upstream and downstream of the delivery pump 3.

Second check means 12 are present in the second conduit 20, for example a solenoid valve, arranged downstream of the first and second sensor organs 21, 22 and the delivery pump 3, destined to enable or prevent the flow of the LPG towards the delivery tube T.

In a constructional solution, a first unidirectional valve 23 is arranged in the second conduit 20, downstream of the second check means 12, such as to prevent liquid return towards the container 2.

In a constructional variant of the system 100 a heat exchanger 24 is present (denoted with broken lines), located in series with the second conduit 20, between the delivery pump 3 and the second check means 12.

The heat exchanger 24 has the aim of reducing or increasing the gas temperature before it enters either the injection pump Pi or the injectors directly: for this purpose the exchanger 24 can be connected to a refrigerating plant (not illustrated).

The pressure and temperature values of the gas in the liquid state, on exit from the heat exchanger 24, are controlled by the second sensor organs 22, suitably located more downstream; alternatively, further sensor organs, not illustrated, can be comprised.

In the fuel delivery tube T, third check means 13 are inserted downstream of the supply pump Pa and upstream with respect to the entry of the second conduit 20, which third check means 13 are also constituted for example by a respective solenoid valve, suitable for enabling or preventing the flow of the fuel towards the injection apparatus A.

In the delivery tube T, between the third check means 13 and the entry of the second conduit 20, a second unidirectional valve 33 is preferably comprised, arranged such as to prevent the return of the liquid towards the tank S.

For the correct functioning of the system 100, a gas (LPG) return circuit is included, for the gas not used by the injectors U, which is predisposed specifically such as to integrate with the original circuit; this gas return circuit has not been illustrated, as it is of a type known to the expert in the sector and not influencing the functioning of the system.

Also included in the system 100 are electronic managing and control means 4, which receive the signals sent by the first and second sensor organs 21, 22 and oversee the functioning of the above-described components, as described.

Using a known fuel switch, not illustrated, the driver of the vehicle starts the system 100 for supplying the engine M with the LPG gas.

On start-up, in suitable phase-relation, the following are commanded:
- timed and intermittent opening of the first check means 11, for controlled inflow of gas (LPG) in the liquid state from the cylinder 1 to the sealed container 2, such as to maintain the pressure thereof at a predetermined constant value; the time and frequency of opening of the first check means 11 enable maintaining, internally of the container 2, a gas level that is practically constant, according to the consumption of the engine M;
- closing of the third check means 13 and deactivation of the supply pump Pa, for interrupting the inflow of fuel coming from the tank S into the delivery tube T;
- activating of the delivery pump 3 and the opening of the second check means 12 for sending the gas (LPG) in the liquid state, having a predetermined constant pressure, to the injection pump Pi, from which the gas (LPG) in the liquid state, with a duly increased pressure, is destined to be subsequently sprayed by the at least an injector (U) such as to supply the engine (M), according to the parameters (injection time and phasing) memorised in the respective electronic control and command organs C and used also with the original fuel.

If the system 100 is provided with the exchanger 24, the final step also comprises the activation of the refrigerating plant (if present) associated thereto.

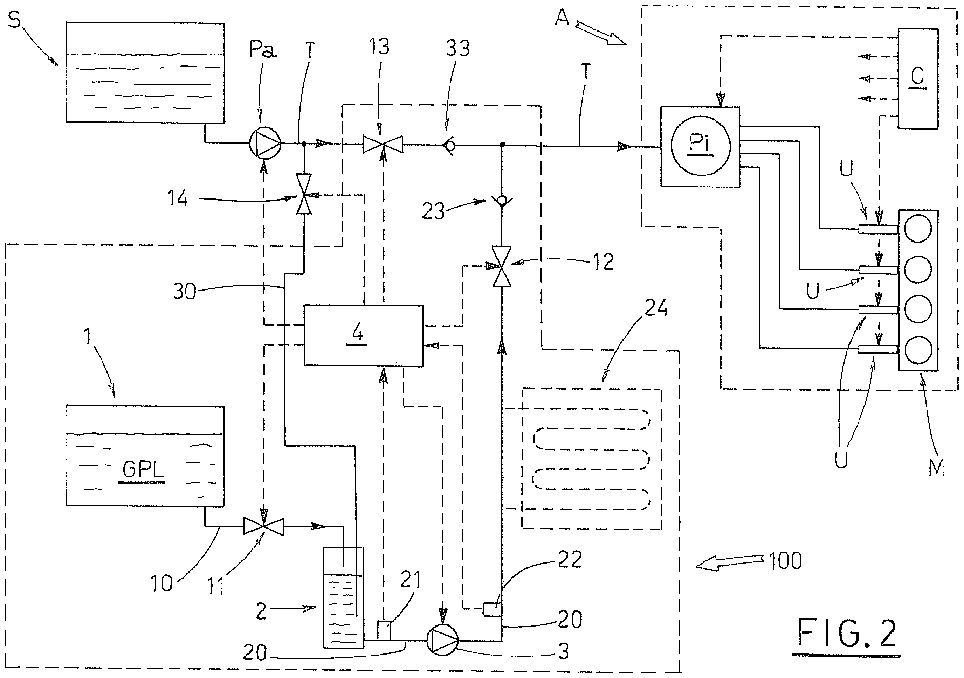

The system 100 of the invention, illustrated in figure 2, is destined in particular to some types of engine to be better identified as in an experimental phase, for example comprised among those provided with common rail injection, or pump-injectors.

The system 100 of the invention includes a third conduit 30, branched from the delivery tube T of the fuel downstream of the supply pump Pa and opening internally of the sealed container 2.

Fourth check means 14 are present in the third conduit 30, for example a solenoid valve, controlled by the management and control means 4 which command the times and intermittent opening thereof for injection of batched quantities of diesel in the sealed container 2, with the aim of obtaining a liquid composition formed prevalently by liquefied petroleum gas (LPG), in which a predetermined percentage of diesel (up to about 20%) is emulsified.

The liquid composition is then supplied to the injectors U, through the second conduit 20, as described above.

The "enriching" of the gas (LPG) with the diesel is advantageously commanded when the rotation regime of the engine is below a predetermined threshold (about 2000 rpm), in order to regularise and make functioning more fluid during the step of acceleration and prevent abrupt operating changes.

Above the mentioned threshold, the diesel is eliminated, for example progressively, in order to supply the engine M with only the LPG gas.

To return the functioning of the engine M to the original fuel, the switch is operated, similarly to with known-type systems.

The above is understood to be by way of non-limiting example, and any eventual modifications in detail or addition of components aimed at improving the performance of the system of the invention, are considered to fall within the scope of protection defined by the following claims.

## Claims

1. A supply system (100) for internal combustion engines by means of Liquid Petroleum Gas (LPG), the supply system (100) being of a type suitable for flanking an original fuel supply plant provided in an internal combustion engine (M) of a Diesel cycle type and comprising:
a tank (S) for the fuel;
a supply pump (Pa) associated to a delivery tube (T) of the fuel collected from the tank (S);
an injection apparatus (A) constituted by at least an injection pump (Pi) destined to receive the fuel that has flowed through the tube (T), and by at least an injector (U), suitable for dispensing batched quantities of the fuel, supplied by the injection pump (Pi), to the cylinders of the internal combustion engine (M);
electronic control means (C), destined to pilot functioning of the injection pump (Pi) and the injector (U), according to predetermined parameters;
a cylinder (1) suitable for containing liquid petroleum gas (LPG) at pressure;
a first conduit (10), suitable for enabling outlet from the cylinder (1) of liquid petroleum gas (LPG) consequently to opening of first check means (11) associated to the first conduit (10);
a sealed container (2) suitable for internally receiving the gas (LPG) carried by the first conduit (10), and maintaining it in a liquid state;
a second conduit (20), suitable for enabling outflow from the sealed container (2) of the gas (LPG) in the liquid state and introducing said gas (LPG) into the fuel delivery tube (T), downstream of the fuel pump (Pa) of the original supply plant;
a delivery pump (3), associated to the second conduit (20), suitable for increasing the pressure of the gas (LPG) in the liquid state by a predetermined gradient with respect to a pressure at which the gas (LPG) is kept internally of the container (2);
first and second sensor means (21, 22), for detecting pressure values of the gas (LPG) in liquid state, associated to the second conduit (20), respectively upstream and downstream of the delivery pump (3);
second check means (12), associated to the second conduit (20), downstream of the delivery pump (3), suitable for enabling or preventing flow of the gas (LPG) towards the delivery tube (T);
third check means (13), associated to the fuel delivery tube (T), downstream of the supply pump (Pa) and upstream of a connection of the tube (T) of the second conduit (20), suitable for enabling or preventing flow of the fuel towards the injection apparatus (A);
electronic management and control means (4), suitable for receiving signals sent by the first and second sensor means (21, 22) and for activating, in appropriate phase relation: a timed and intermittent opening of the first check means (11) for controlled inflow of gas (LPG) in liquid state to the sealed container (2), such as to maintain the pressure at a predetermined constant value; closure of the third check means (13) and deactivation of the supply pump (Pa); activation of the delivery pump (3) and opening of the second check means (12), for sending the gas (LPG) in the liquid state, having a predetermined constant pressure, to the delivery tube (T) in place of the original fuel, the gas (LPG) being destined to supply the at least an injection pump (Pi) and to be subsequently sprayed, still in the liquid state, by the at least an injector (U);
**characterised in that** it comprises a third conduit (30), branched from the delivery tube (T) of the fuel downstream of the supply pump (Pa) and terminating internally of the sealed container (2), fourth check means (14) being provided in the third conduit (30), which fourth check means (14) are operated by the electronic management and control (4) means destined to command timed and intermittent opening thereof for injection of batched quantities of original fuel into the sealed container (2), with an aim of obtaining a composite liquid, formed by liquid petroleum gas (LPG) emulsified by a predetermined percentage of the original fuel, destined to supply the engine (M) when a revolution regime thereof is below a predetermined threshold.

2. The system (100) of claim 1, **characterised in that** it comprises a heat exchanger (24), located in series on the second conduit (20), between the delivery pump (3) and the second check means (12), and destined to increasingly or decreasingly vary the temperature of the gas (LPG) before it enters the injection pump (Pa).

3. The system (100) of claim 2, **characterised in that** the exchanger (24) is connected with a refrigeration plant.

4. The system (100) of claim 1, **characterised in that** the in the second conduit (20), downstream of the second check means (12), a first unidirectional valve (23) is provided, arranged such as to prevent return of liquid towards the sealed container (2).

5. The system (100) of claim 1, **characterised in that** a second unidirectional valve (33) is provided in the delivery tube (T) between the third check means (13) and the connection of the second conduit (20), which second unidirectional valve (33) is arranged such as to prevent return of liquid towards the tank (S).

6. The system (100) of claim 1, **characterised in that** the first and second sensor means (21, 22) are destined to detect the corresponding temperature values of the gas (LPG) in the liquid state.

## Patentansprüche

1. System (100) zur Versorgung von Brennkraftmaschinen mit verflüssigtem Erdölgas (LPG - Liquid Petroleum Gas), wobei das Versorgungssystem (100) der Art ist, die dazu geeignet ist, zusätzlich zu einer in einer Brennkraftmaschine (M) der Gattung mit Diesel-Kreisprozess vorgesehenen ursprünglichen Kraftstoffversorgungsanlage eingesetzt zu werden, und Folgendes beinhaltet:
einen Tank (S) für den Kraftstoff;
eine Kraftstoffzufuhrpumpe (Pa), die mit einer Zufuhrleitung (T) für den aus dem Tank (S) entnommenen Kraftstoff verbunden ist;
eine Einspritzvorrichtung (A), die aus zumindest einer Einspritzpumpe (Pi) besteht, die dafür bestimmt ist, den durch die Leitung (T) geströmten Kraftstoff zu empfangen, und aus zumindest einer Einspritzdüse (U), die geeignet ist, bestimmte Mengen des von der Einspritzpumpe (Pi) zugeführten Kraftstoffes den Zylindern der Brennkraftmaschine (M) zuzumessen;
elektronische Steuermittel (C), die geeignet sind, die Funktion der Einspritzpumpe (Pi) und der Einspritzdüse (U) gemäß vorbestimmter Parameter zu steuern;
einen Zylinder (1), der für die Aufnahme von unter Druck stehendem verflüssigtem Erdölgas (LPG) geeignet ist;
eine erste Leitung (10), die geeignet ist, infolge der Öffnung erster Absperrmittel (11), die mit der ersten Leitung (10) verbunden sind, das Austreten von verflüssigtem Erdölgas (LPG) aus dem Zylinder (1) zu ermöglichen;
einen abgedichteten Behälter (2), der geeignet ist, in seinem Inneren das über die erste Leitung (10) zugeführte Gas (LPG) aufzunehmen und im flüssigen Zustand zu halten;
eine zweite Leitung (20), die geeignet ist, das Austreten von Gas (LPG) in flüssigem Zustand aus dem abgedichteten Behälter (2) zu ermöglichen und das Gas in die Kraftstoffzufuhrleitung (T) stromabwärts von der Kraftstoffzufuhrpumpe (Pa) der ursprünglichen Kraftstoffversorgungsanlage einzuleiten;
eine Förderpumpe (3), die mit der zweiten Leitung (20) verbunden und geeignet ist, den Druck des Gases (LPG) in flüssigem Zustand um einen vorbestimmten Gradienten relativ zu dem Druck zu erhöhen, auf dem das Gas (LPG) im Inneren des Behälters (2) gehalten wird;
erste und zweite Fühlermittel (21, 22) zur Erfassung der Druckwerte des Gases (LPG) in flüssigem Zustand, die mit der zweiten Leitung (20) jeweils stromaufwärts beziehungsweise stromabwärts von der Förderpumpe (3) verbunden sind;
zweite Absperrmittel (12), die mit der zweiten Leitung (20) stromabwärts von der Förderpumpe (3) verbunden und geeignet sind, das Strömen des Gases (LPG) zur Kraftstoffzufuhrleitung (T) zu ermöglichen beziehungsweise zu verhindern;
dritte Absperrmittel (13), die mit der Kraftstoffzufuhrleitung (T) stromabwärts von der Kraftstoffzufuhrpumpe (Pa) und stromaufwärts von einem Anschluss der zweiten Leitung (20) in die Kraftstoffzufuhrleitung (T) verbunden sind, und die geeignet sind, das Strömen des Kraftstoffs zur Einspritzvorrichtung (A) zu ermöglichen beziehungsweise zu verhindern;
elektronische Leit- und Steuereinrichtungen (4), die geeignet sind, die von den ersten und zweiten Fühlermitteln (21, 22) gesendeten Signale zu empfangen und in geeigneter Phasenbeziehung Folgendes zu aktivieren: zeitgesteuertes und intermittierendes Öffnen der ersten Absperrmittel (11) für das kontrollierte Einströmen von Gas (LPG) in flüssigem Zustand in den abgedichteten Behälter (2), um dessen Druck auf einem vorbestimmten konstanten Wert zu halten; Schließen der dritten Absperrmittel (13) und Deaktivieren der Kraftstoffzufuhrpumpe (Pa); Aktivieren der Förderpumpe (3) und Öffnen der zweiten Absperrmittel (12), um das Gas (LPG) in flüssigem Zustand mit vorbestimmtem konstant gehaltenen Druck anstelle des ursprünglichen Kraftstoffs in die Kraftstoffzufuhrleitung (T) zu leiten, wobei das Gas (LPG) dafür bestimmt ist, die zumindest eine Einspritzpumpe (Pi) zu speisen und anschließend, immer noch im flüssigen Zustand, von der zumindest einen Einspritzdüse (U) eingespritzt zu werden.
**dadurch gekennzeichnet, dass** es eine dritte Leitung (30) beinhaltet, die von der Kraftstoffzufuhrleitung (T) stromabwärts von der Kraftstoffzufuhrpumpe (Pa) abgezweigt ist und im Innern des abgedichteten Behälters (2) endet, und vierte Absperrmittel (14) beinhaltet, die in der dritten Leitung (30) vorgesehen sind, wobei die vierten Absperrmittel (14) durch die elektronischen Leit- und Steuereinrichtungen (4) betätigt werden, die dafür ausgelegt sind, deren zeitgesteuertes und intermittierendes Öffnen anzusteuern, um dosierte Mengen des ursprünglichen Kraftstoffs in den abgedichteten Behälter (2) einzuspritzen, mit dem Ziel, eine zusammengesetzte Flüssigkeit zu erhalten, bestehend aus verflüssigtem Erdölgas (LPG), emulgiert mit einem vorbestimmten Prozentanteil des ursprünglichen Kraftstoffs, und dazu bestimmt, die Brennkraftmaschine (M) zu versorgen, wenn deren Drehzahlregime unter einem vorgegebenen Schwellenwert liegt.

2. System (100) nach Anspruch 1, **dadurch gekennzeichnet, dass** es einen Wärmeübertrager (24) beinhaltet, der in Reihe auf der zweiten Leitung (20) zwischen der Förderpumpe (3) und den zweiten Absperrmitteln (12) angeordnet und dazu bestimmt ist, die Temperatur des Gases (LPG) zu erhöhen oder zu verringern, bevor das Gas in die Einspritzpumpe (Pi) eintritt.

3. System (100) nach Anspruch 2, **dadurch gekennzeichnet, dass** der Wärmeübertrager (24) an eine Kühlanlage angeschlossen ist.

4. System (100) nach Anspruch 1, **dadurch gekennzeichnet, dass** ein erstes Einwegventil (23) in der zweiten Leitung (20) stromabwärts von den zweiten Absperrmitteln (12) vorgesehen ist, welches derart angeordnet ist, dass es das Zurückströmen von Flüssigkeit zum abgedichteten Behälter (2) verhindert.

5. System (100) nach Anspruch 1, **dadurch gekennzeichnet, dass** ein zweites Einwegventil (33) in der Kraftstoffzufuhrleitung (T) zwischen den dritten Absperrmitteln (13) und dem Anschluss der zweiten Leitung (20) angeordnet ist, wobei das zweite Einwegventil (33) derart angeordnet ist, dass es das Zurückströmen von Flüssigkeit zum Tank (S) verhindert.

6. System (100) nach Anspruch 1, **dadurch gekennzeichnet, dass** die ersten und zweiten Fühlermittel (21, 22) dazu bestimmt sind, die entsprechenden Temperaturwerte des Gases (LPG) in flüssigem Zustand zu erfassen.

## Revendications

1. Un circuit d'alimentation (100) pour des moteurs à combustion interne au moyen de gaz de pétrole liquéfié (GPL), le circuit d'alimentation (100) étant d'un type destiné à se joindre à un système d'alimentation en carburant original prévu dans un moteur à combustion interne (M) d'un type à cycle Diesel et comprenant :
un réservoir (S) pour le carburant ;
une pompe d'alimentation (Pa) associée à un tuyau (T) d'amenée du carburant prélevé du réservoir (S) ;
un appareil d'injection (A) comprenant au moins une pompe d'injection (Pi) destinée à recevoir le carburant qui s'est écoulé à travers le tuyau (T), et au moins un injecteur (U), destiné à distribuer des quantités dosées du carburant, alimenté par la pompe d'injection (Pi), aux cylindres du moteur à combustion interne (M) ;
des moyens électroniques de commande (C), destinés à piloter le fonctionnement de la pompe d'injection (Pi) et de l'injecteur (U), selon des paramètres prédéfinis ;
une bouteille (1) destinée à contenir du gaz de pétrole liquéfié (GPL) sous pression ;
un premier conduit (10), destiné à permettre la sortie, de la bouteille (1), de gaz de pétrole liquéfié (GPL) suite à l'ouverture de premiers moyens d'arrêt (11) associés au premier conduit (10) ;
un contenant étanche (2) destiné à recevoir à l'intérieur le gaz (GPL) véhiculé par le premier conduit (10), et à le maintenir dans un état liquide ;
un deuxième conduit (20), destiné à permettre la sortie, du contenant étanche (2), du gaz (GPL) à l'état liquide et à introduire ledit gaz (GPL) dans le tuyau d'amenée (T) du carburant, en aval de la pompe à carburant (Pa) du système d'alimentation original ;
une pompe d'amenée (3), associée au deuxième conduit (20), destinée à augmenter la pression du gaz (GPL) à l'état liquide d'un gradient prédéfini par rapport à une pression à laquelle le gaz (GPL) est maintenu à l'intérieur du contenant (2) ;
des premiers et deuxièmes moyens capteurs (21, 22), pour détecter des valeurs de pression du gaz (GPL) à l'état liquide, associés au deuxième conduit (20), respectivement en amont et en aval de la pompe d'amenée (3) ;
des deuxièmes moyens d'arrêt (12), associés au deuxième conduit (20), en aval de la pompe d'amenée (3), destinés à permettre ou à empêcher le flux du gaz (GPL) vers le tuyau d'amenée (T) ;
des troisièmes moyens d'arrêt (13), associés au tuyau (T) d'amenée de carburant, en aval de la pompe d'alimentation (Pa) et en amont d'un raccord, dans le tuyau (T), du deuxième conduit (20), destinés à permettre ou à empêcher le flux du carburant vers l'appareil d'injection (A) ;
des moyens électroniques de gestion et de commande (4), destinés à recevoir des signaux envoyés par les premiers et deuxièmes moyens capteurs (21, 22) et à activer, selon une relation de phase appropriée : une ouverture temporisée et intermittente des premiers moyens d'arrêt (11) pour un écoulement contrôlé de gaz (GPL) à l'état liquide vers le contenant étanche (2), de manière à maintenir la pression à une valeur constante prédéfinie ;
la fermeture des troisièmes moyens d'arrêt (13) et la désactivation de la pompe d'alimentation (Pa);
l'activation de la pompe d'amenée (3) et l'ouverture des deuxièmes moyens d'arrêt (12), pour envoyer le gaz (GPL) à l'état liquide, ayant une pression constante prédéfinie, au tuyau d'amenée (T) à la place du carburant original, le gaz (GPL) étant destiné à alimenter ladite au moins une pompe d'injection (Pi) et à être ensuite pulvérisé, encore à l'état liquide, par ledit au moins un injecteur (U) ;
**caractérisé en ce qu'**il comprend un troisième conduit (30), dérivé du tuyau (T) d'amenée du carburant en aval de la pompe d'alimentation (Pa) et débouchant à l'intérieur du contenant étanche (2), des quatrièmes moyens d'arrêt (14) étant prévus dans le troisième conduit (30), lesdits quatrièmes moyens d'arrêt (14) sont actionnés par les moyens électroniques de gestion et de commande (4) destinés à en commander l'ouverture temporisée et intermittente pour l'injection de quantités dosées de carburant original dans le contenant étanche (2), dans le but d'obtenir un liquide composite, formé de gaz de pétrole liquéfié (GPL) émulsionné avec un pourcentage prédéfini de carburant original, destiné à alimenter le moteur (M) quand le régime de tours de celui-ci est en dessous d'un seuil prédéfini.

2. Le circuit (100) selon la revendication 1, **caractérisé en ce qu'**il comprend un échangeur thermique (24), situé en série sur le deuxième conduit (20), entre la pompe d'amenée (3) et les deuxièmes moyens d'arrêt (12), et destiné à faire varier de façon croissante ou décroissante la température du gaz (GPL) avant que celui-ci entre dans la pompe d'injection (Pi).

3. Le circuit (100) selon la revendication 2, **caractérisé en ce que** l'échangeur (24) est relié à un système de réfrigération.

4. Le circuit (100) selon la revendication 1, **caractérisé en ce que** dans le deuxième conduit (20), en aval des deuxièmes moyens d'arrêt (12), une première vanne unidirectionnelle (23) est prévue, disposée de manière à empêcher le retour de liquide vers le contenant étanche (2).

5. Le circuit (100) selon la revendication 1, **caractérisé en ce qu'**une deuxième vanne unidirectionnelle (33) est prévue dans le tuyau d'amenée (T) entre les troisièmes moyens d'arrêt (13) et le raccord du deuxième conduit (20), ladite deuxième vanne unidirectionnelle (33) est disposée de manière à empêcher le retour de liquide vers le réservoir (S).

6. Le circuit (100) selon la revendication 1, **caractérisé en ce que** les premiers et deuxièmes moyens capteurs (21, 22) sont destinés à détecter les valeurs de température correspondantes du gaz (GPL) à l'état liquide.
